**Europäisches Patentamt**

(19) **European Patent Office**

**Office européen des brevets**

(11) Publication number : **0 344 923 B1**

(12) **EUROPEAN PATENT SPECIFICATION**

(45) Date of publication of patent specification :
21.10.92 Bulletin 92/43

(51) Int. Cl.⁵ : **B60G 13/18, F16F 7/10**

(21) Application number : **89304550.0**

(22) Date of filing : **05.05.89**

(54) **Vehicle suspension system.**

(30) Priority : **16.05.88 US 194515**

(43) Date of publication of application :
**06.12.89 Bulletin 89/49**

(45) Publication of the grant of the patent :
**21.10.92 Bulletin 92/43**

(84) Designated Contracting States :
**AT BE CH DE ES FR GB GR IT LI LU NL SE**

(56) References cited :
**FR-A- 1 409 520**
**US-A- 2 537 479**
**US-A- 2 901 239**
**US-A- 2 955 841**

(73) Proprietor : **BOSE CORPORATION**
**100 The Mountain Road**
**Framingham, Massachusetts 01701 (US)**

(72) Inventor : **Hanson, David E.**
**297 Turnpike Road**
**Westborough Massachusetts 01581 (US)**

(74) Representative : **Brunner, Michael John et al**
**GILL JENNINGS & EVERY 53-64 Chancery Lane**
**London WC2A 1HN (GB)**

**EP 0 344 923 B1**

## Description

The present invention relates in general to wheel damping and more particularly concerns novel apparatus and techniques for damping a wheel substantially in its plane, such as internally of the wheel to reduce torques about the wheel center and accommodate the damping mass in a convenient location.

The use of damping masses is known. For a discussion of vehicle suspension systems with mass damping, reference is made to a paper of Ghoneim and Cheema entitled "On the Application of Optimum Damped Absorber to Vehicle Suspension," 108 Transactions of the ASME Journal of Mechanisms, Transmissions, and Automation in Design 22 (March 1986).

US-A-2955841 discloses a wheel hop damper according to the preamble of claim 1 in which arcuate cast iron weights are able to move in arcs within a wheel under the action of springs.

It is an important object of this invention to provide a vehicle suspension system with improved damping.

According to the present invention, there is provided a vehicle suspension system for supporting a suspended mass comprising a vehicle body, the suspension system comprising: an unsuspended mass comprising a wheel rotatable about a wheel axis in a rotation plane perpendicular to the wheel axis; damping mass means located to embrace the rotation plane and disposed about the wheel axis for damping vibration of the wheel; characterised in that: the damping mass means is translatable relative to the wheel parallel to a non-rotating damping mass axis passing through the wheel axis and in the rotation plane.

Preferably the invention is used in a vehicle suspension system having an actuator connected between the suspended mass, such as the body subframe, and the unsuspended mass, such as the wheel.

Numerous other features, objects and advantages of the invention will become apparent from the following specification when read in conjunction with the accompanying drawings in which:

FIGS. 1A, 1B and 1C are diagrammatic representations of suspension systems with damping masses outside, inside and within the wheel, respectively;

FIG. 2 is a fragmentary plan view partially in section of an embodiment of the invention showing a wheel with damping mass within the wheel;

FIG. 3 is a sectional elevation through section 3-3 of FIG. 2;

FIG. 4 is a perspective view illustrating the structure of the centering springs; and,

FIG. 5 is a diagrammatic elevation partially in section of an alternative embodiment of the invention in which damping fluid also functions as a major component of the damping mass.

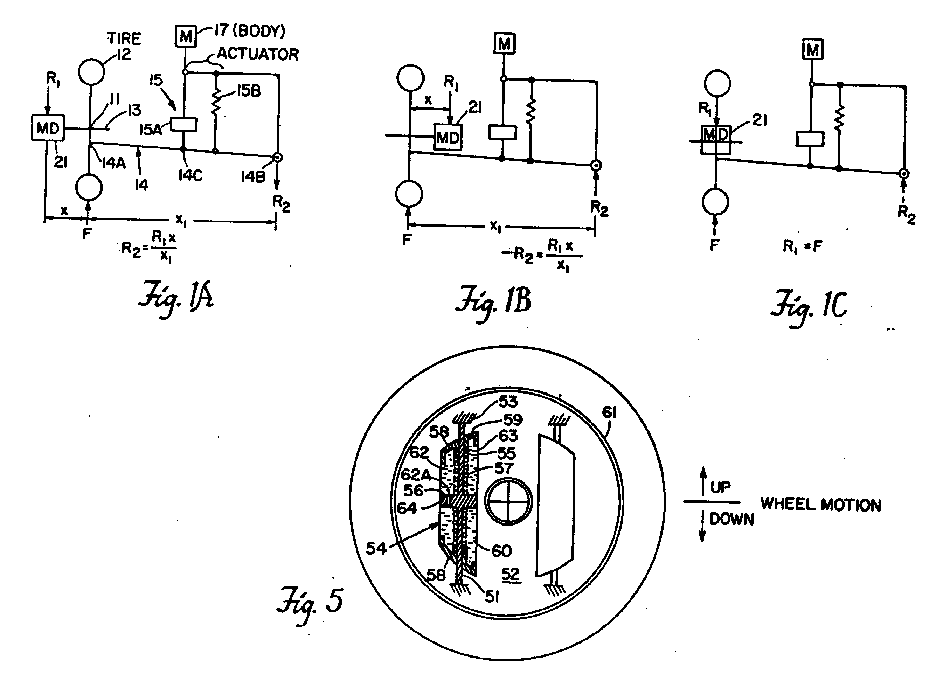

With reference now to the drawings and more particularly FIGS. 1A, 1B and 1C thereof, there are shown diagrammatic representations of suspension systems having the damping mass outside, inside and within the wheel, respectively. A wheel and hub 11 carries a tire 12 and rotates about a wheel axle 13. A control arm 14 is pivotally connected to the wheel support at one end 14A, to the vehicle body, such as the differential housing, at the other end 14B and to the actuator in the middle at 14C. The actuator 15 includes actuator body 15A and a spring 15B to support the steady-state load or suspended mass 17, in this example, the vehicle body, between control arm 14 and the suspended body mass 17 of the vehicle. A damping mass 21 is shown centered about the wheel axis 13. The force F exerted on tire 12 by the ground from damping mass 21 may be divided into a component $R_1$ passing through the damping mass and a force $R_2$ passing through end 14B such that the sum of the moments of these forces about the wheel center is substantially zero. With the damping mass 21 outside the wheel as shown in FIG. 1A, both the forces $R_1$ and $R_2$ are downward. With the damping mass 21 inside the wheel as shown in FIG. 1B, the reaction force $R_2$ is directed upward. With mass 21 centered in the wheel according to the invention as shown in FIG. 1C, the force $F = R_1$, and there is no damping mass moment about the wheel center transmitted to body 30. Apart from omitting stresses in members caused by these moments, an advantage of the approach according to the invention is that to achieve a given effective damping, the damping mass 21 located within the wheel as shown in FIG. 1C may be less than when positioned as in FIG. 1B. Furthermore, the mechanical packaging is improved with the arrangement of FIG. 1C.

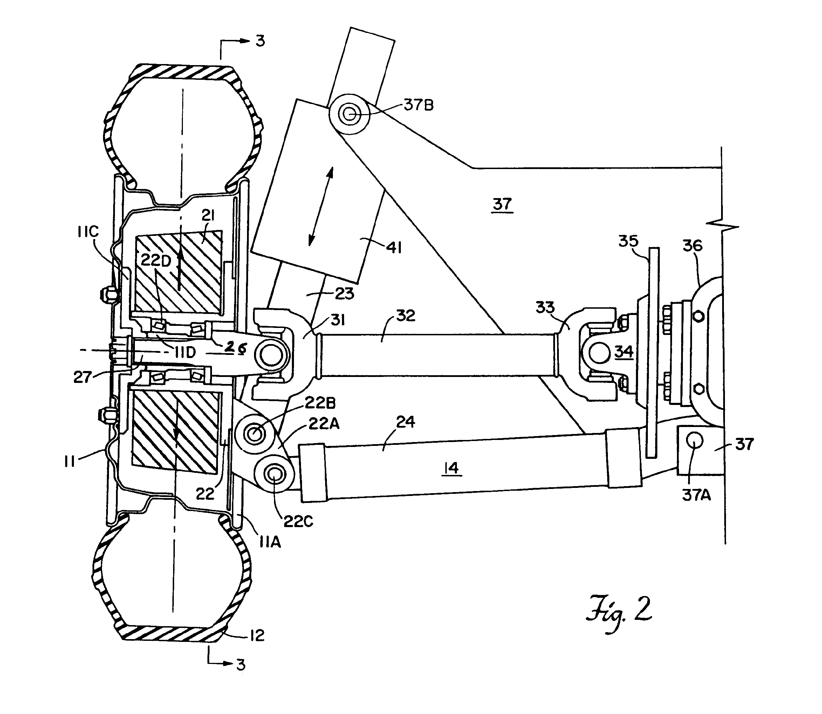

Referring to FIG. 2, there is shown a fragmentary elevation view with wheel structure in section of an embodiment of the invention with the damping mass 21 inside the wheel and hub 11. Wheel and hub 11 includes a wheel rim 11A. A stationary mass support platform 22 carries damping mass 21 and is formed with an inwardly extending arm 22A having a pivot 22B pivotally connecting platform 22 to actuator shaft 23 and a pivot 22C pivotally connecting platform arm 22A to control arm 24. Hub 11 includes a flange 11C extending from inner race 11D of wheel bearing 26 whose outer race 22D comprises mass support 22. Hub flange 11C mates with (by spline) and surrounds wheel spindle 27 connected by U joint 31 to axle 32 connected at the other end by U joint 33 to brake support member 34 that carries brake disk 35 and is connected to the differential housing drive gears 36. The other end of control arm 24 is pivotally connected at 37A to body subframe 37. Actuator body 41 is pivotally connected at 37B to body subframe 37 to actuate actuator arm 23 and counter forces exerted by the road on tire 12.

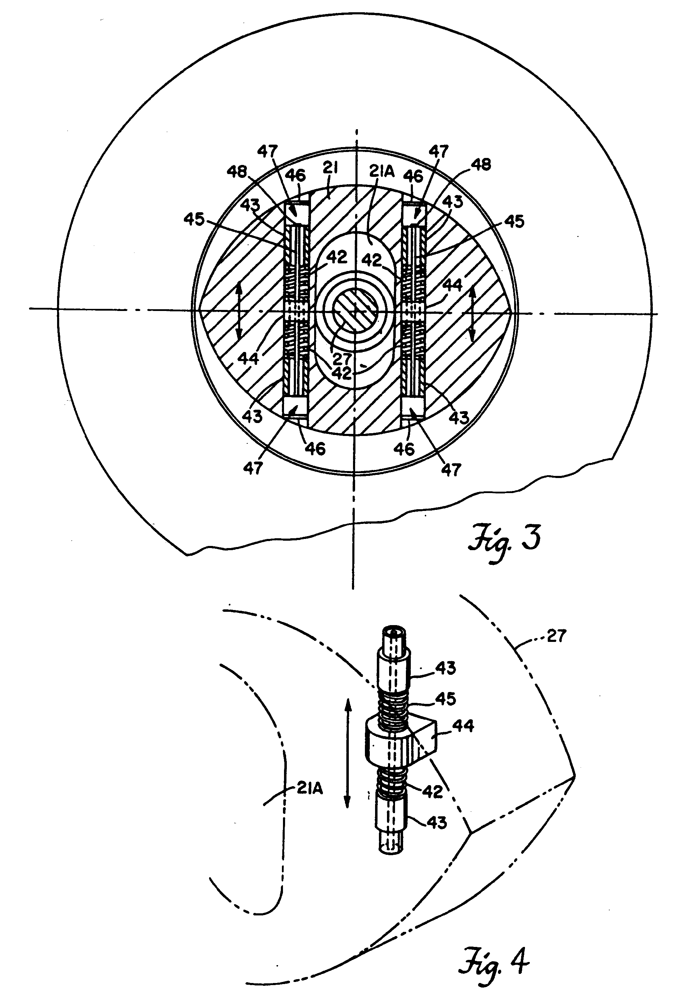

Referring to FIG. 3, there is shown a sectional elevation through section 3-3 of FIG. 2 illustrating structural details of a preferred form of damping mass 21 and structure for supporting it. Damping mass 21 is of generally ogival shape as shown formed with a slot 21A having its length perpendicular to the long horizontal axis of the ogival cross section of damping mass 21. Damping mass 21 rests on centering springs 42 situated between bearings 43 and fixed shaft retainers 44 through which pass hollow shafts 45 connected to upper and lower chambers 47 filled with damping fluid and capped by end plugs 46. Thus damping mass 21 is free to move vertically, but restrained by bearing 26 from moving horizontally. Vertical movement of damping mass 21 produces fluid displacement across damping orifice 48 to convert vibratory energy from damping mass 21 into frictional heat dissipated at orifice 48.

Referring to FIG. 4, there is shown a perspective view of the damping mass control system with edges of damping mass 21 shown in dash-dotted lines to illustrate the structure just described with caps 46 omitted.

Referring to FIG. 5, there is shown a diagrammatic plan view, partially in section, of still another form of the invention in which the damping fluid also comprises damping mass. Concentric support shaft 51 is attached to axle hub 52 by mount 53. Damper cylinder 54 is fitted over concentric shaft 51 and ride-in shaft bearings 55. Orifice plate 56 provides additional support. Springs 57 center damper cylinder 54 under static conditions. Damper cap 58 is fitted to damper cylinder 54 and sealed by welding or other suitable means.

Fill port 59 admits damping fluid 60 through back filling as air is evacuated therethrough. As wheel 61 moves up and down, damping fluid 60 is pumped from one damper chamber 62 to the other through damping orifice 62A. Shaft seals 63 prevent leakage of damping fluid 60 past shaft bearing 55. A cylinder seal 64 ensures flow of damping fluid 60 through damping orifice 62. An advantage of this arrangement is that damping fluid 60 functions both as a viscous damping fluid and a major portion of the damping mass. Suitable fluids for use in the invention may include filled silicones, mercury or other suitable fluid, preferably with sufficient density to provide for adequate damping.

## Claims

1. A vehicle suspension system for supporting a suspended mass comprising a vehicle body, the suspension system comprising:

   an unsuspended mass comprising a wheel (11) rotatable about a wheel axis (13) in a rotation plane perpendicular to the wheel axis;

   damping mass means (21,60) located to embrace the rotation plane and disposed about the wheel axis for damping vibration of the wheel; characterised in that:

   the damping mass means (21,60) is translatable relative to the wheel parallel to a non-rotating damping mass axis passing through the wheel axis (13) and in the rotation plane.

2. A suspension system according to claim 1, including a bearing (26), the damping mass means being formed with a central opening (21A) in which the bearing is located.

3. A suspension system according to claim 2, wherein the damping mass means (21) is formed with a vertical slot (21A) of a width corresponding substantially with the diameter of the bearing (26), to resist horizontal movement of the damping mass means while allowing vertical movement thereof.

4. A suspension system according to claim 3, wherein the damping mass means (21) is of generally ogival cross-section with the major diameter thereof substantially perpendicular to the length of the slot (21A).

5. A suspension system according to claim 4, wherein the damping mass means (21) is formed with a vertical opening on each side of the slot (21A), and further comprising:

   damping mass supporting means for supporting the damping mass means, the damping mass supporting means having a support assembly (42-46) in each of the openings (47), each of the support assemblies including:

   a vertical shaft (45);

   a shaft retainer (44) intermediate the ends of the shaft and supporting the shaft;

   upper and lower bearings (43); and,

   centering springs (42) between the shaft retainer and each of the bearings.

6. A suspension system according to claim 5, wherein the centering springs (42) are precompressed.

7. A suspension system according to any of claims 1 to 6, further comprising:

   an axle (32) connected to a wheel spindle (27);

   a control arm (14) pivotally connected between the damping mass support means and a vehicle body (37) in use; and,

   actuating means (41) for resisting vertical movement of the wheel, pivotally connected between the vehicle body and the damping mass support means in use.

8. A suspension system according to claim 1, further comprising energy storage means (57) connected to the damping mass means (60) for exchanging energy therewith, and energy dissipating means (54) connected to the damping mass means (60) for dissipating vibrational energy.

9. A suspension system according to claim 8, wherein the energy storage means comprises a spring (57) and the energy dissipating means comprises a dashpot (54).

10. A suspension system according to claim 8 or claim 9, wherein the energy dissipating means comprises damping fluid (60) which also comprises a major component of the damping mass means.

11. A suspension system according to claim 8, further comprising:
    a support assembly on each side of the wheel axis, each of the support assemblies including:
    a vertical shaft (51);
    a shaft retainer (56) intermediate the ends of the shaft and supporting the shaft;
    upper and lower bearings (55); and,
    centering springs (57) between the shaft retainer and each of the bearings;
    each support assembly further comprising end chambers (62) carrying damping fluid (60), the respective vertical shaft (51) being seated in the end chambers and displacing damping fluid when the damping mass means is in motion.

12. A suspension system according to claim 11, wherein the vertical shaft is hollow and comprises the damping mass support means, and wherein the support assembly further comprises means (62A) for allowing the passage of damping fluid from a first of the chambers to a second.

13. A suspension system according to claim 12, wherein the means for allowing passage of damping fluid comprises a restrictive orifice (62A) for establishing a predetermined damping factor.

14. A vehicle having a suspension system according to any of claims 1 to 13.

15. A vehicle according to claim 14, further including a wheel (11), the wheel having an annular region around the wheel axis (13), the damping mass means (21,60) being located in the annular region.

16. A vehicle according to claim 17, when dependent on claim 8, wherein the energy storage means and the energy dissipating means are located in the annular region.

**Patentansprüche**

1. Ein Fahrzeugaufhängungssystem zum Tragen einer aufgehängten Masse, die folgendes umfaßt: eine Fahrzeugkarosserie, das Aufhängungssystem, das aus folgenden Teilen besteht: eine nicht aufgehängte Masse, die aus einem Rad (11) besteht, das in einer senkrecht zur Radachse (13) angeordneten Drehebene um die Radachse drehbar ist; eine Dämpfungsmasse (21, 60), die so angeordnet ist, daß sie die Drehebene umgibt, und sich zur Vibrationsdämpfung des Rades um die Radachse herum befindet; Dieses System ist dadurch gekennzeichnet, daß die Dämpfungsmasse (21, 60) bezogen auf das Rad und parallel zu einer sich nicht drehenden Dämpfungsmassenachse übertragbar ist, die durch die Radachse (13) und in der Drehebene verläuft.

2. Ein Aufhängungssystem gemäß Anspruch 1, das ein Lager (26) enthält und bei dem die Dämpfungsmasse mit einer zentralen Öffnung (21A) ausgebildet ist, in der sich das Lager befindet.

3. Ein Aufhängungssystem gemäß Anspruch 2, bei dem die Dämpfungsmasse (21) mit einem senkrechten Spalt (21A) mit einer Breite, die im wesentlichen dem Durchmesser des Lagers (26) entspricht, ausgebildet ist, um der horizontalen Bewegung der Dämpfungsmasse zu widerstehen, aber gleichzeitig ihre vertikale Bewegung zuzulassen.

4. Ein Aufhängungssystem gemäß Anspruch 3, bei dem die Dämpfungsmasse (21) einen generell spitzbogigen Querschnitt aufweist, wobei dessen Hauptdurchmesser im wesentlichen senkrecht zur Länge des Schlitzes (21A) verläuft.

5. Ein Aufhängungssystem gemäß Anspruch 4, bei dem die Dämpfungsmasse (21) beidseitig des Schlitzes (21A) mit einer vertikalen Öffnung ausgebildet ist und darüberhinaus folgendes umfaßt: Eine Tragevorrichtung zum Tragen der Dämpfungsmasse, wobei die Tragevorrichtung in jeder der Öffnungen (47) eine Tragebaugruppe (42 - 46) besitzt, und jede Tragebaugruppe folgendes enthält: eine vertikale Welle (45); einen zwischen den Enden der Welle angeordneten und die Welle tragenden Wellenhalter (44);

untere und obere Lager (43); und
Zentrierfedern (42) zwischen dem Wellenhalter und jedem der Lager.

6. Ein Aufhängungssystem gemäß Anspruch 5, bei dem die Zentrierfedern (42) mit einer Vorspannung versehen (zusammengedrückt) sind.

7. Ein Aufhängungssystem gemäß einem der Ansprüche 1 bis 6, das darüberhinaus folgendes umfaßt: eine mit der Radwelle (27) verbundene Achse (32); ein Regulierungsarm (14), der gelenkig zwischen dem Dämpfungsmasseträger und der verwendeten Fahrzeugkarosserie (37) angebracht ist; und ein Betätigungsorgan (41), das der vertikalen Bewegung des Rades entgegenwirkt und gelenkig zwischen der Fahrzeugkarosserie und dem verwendeten Dämpfungsmasseträger angebracht ist.

8. Ein Aufhängungssystem gemäß Anspruch 1, das außerdem ein Mittel zur Energiespeicherung (57) enthält, das zwecks Engergieaustausch mit der Dämpfungsmasse (60) mit dieser verbunden ist, und ein Mittel zum Ableiten der Energie (54), das zwecks Ableitung der Schwingungsenergie mit der Dämpfungsmasse (60) verbunden ist.

9. Ein Aufhängungssystem gemäß Anspruch 8, bei dem das Energiespeichermittel eine Feder (57) und das Energieableitungsmittel einen Stoßdämpfer (54) enthält.

10. Ein Aufhängungssystem gemäß Anspruch 8 oder Anspruch 9, bei dem das Energieableitungsmittel eine Dämpfungsflüssigkeit (60) enthält, die außerdem ein wichtiger Bestandteil der Dämpfungsmasse ist.

11. Ein Aufhängungssystem gemäß Anspruch 8, das darüberhinaus folgendes enthält: eine Tragebaugruppe beiderseits der Radachse, wobei jede Tragebaugruppe aus folgendem besteht: eine vertikale Welle (51); ein Wellenhalter (56), der sich zwischen den Wellenenden befindet und die Welle trägt; untere und obere Lager (55); und Zentrierfedern (57) jeweils zwischen dem Wellenhalter und den Lagern; Jede Tragebaugruppe enthält darüberhinaus Endkammern (62) mit Dämpfungsflüssigkeit (60) und die betreffende vertikale Welle (51) sitzt in den Endkammern und verdrängt Dämpfungsflüssigkeit, wenn sich die Dämpfungsmasse bewegt.

12. Ein Aufhängungssystem entsprechend Anspruch 11, bei dem die vertikale Welle hohl ist und die Dämpfungsmasse enthält und bei dem die Tragebaugruppe außerdem ein Mittel (62A) enthält, das den Übertritt von Dämpfungsflüssigkeit von einer ersten in eine zweite Kammer gestattet.

13. Ein Aufhängungssystem gemäß Anspruch 12, bei dem das Mittel, das den Übertritt der Dämpfungsflüssigkeit gestattet, eine Öffnung (62A) mit begrenzender Wirkung zur Erzeugung eines vorher festgelegten Dämpfungsfaktors hat.

14. Ein Fahrzeug, das ein Aufhängungssystem gemäß einem der Ansprüche 1 bis 13 hat.

15. Ein Fahrzeug gemäß Anspruch 14, das außerdem eine Rad (11) enthält, wobei das Rad einen ringförmigen Bereich um die Radachse (13) hat und die Dämpfungsmasse (21, 60) sich in dem ringförmigen Bereich befindet.

16. Ein Fahrzeug gemäß Anspruch 7, bei Abhängigkeit von Anspruch 8, bei dem sich das Mittel zur Energiespeicherung und das Mittel zum Ableiten der Energie in dem ringförmigen Bereich befinden.

## Revendications

1.- Système de suspension de véhicule pour supporter une masse suspendue comprenant un corps de véhicule, ce système de suspension comportant :
- une masse non suspendue comprenant une roue (11) susceptible de tourner sur un axe de roue (13) dans un plan de rotation perpendiculaire à l'axe de la roue,
- un dispositif de masse d'amortissement (21, 60) placé de façon à contenir le plan de rotation et disposé sur l'axe de la roue pour amortir la vibration de cette roue,
système caractérisé en ce que le dispositif de masse d'amortissement (21, 60) est susceptible d'être translaté par rapport à la roue parallèlement à un axe non tournant de masse de rotation passant à travers l'axe (13) de la roue et situé dans le plan de rotation.

2.- Système de suspension selon la revendication 1, caractérisé en ce qu'il comprend un roulement (26), le dispositif de masse d'amortissement étant prévu avec une ouverture centrale (21A) dans laquelle est placé le roulement.

3.- Système de suspension selon la revendication 2, caractérisé en ce que le dispositif de masse d'amortissement (21) est prévu avec une mortaise verticale (21A) d'une largeur correspondant essentiellement au diamètre du roulement (26), de façon à empêcher un déplacement horizontal du dispositif de masse d'amortissement, tout en permettant un déplacement vertical de ce dispositif.

4.- Système de suspension selon la revendication 3, caractérisé en ce que le dispositif de masse d'amortissement (21) a, dans l'ensemble, une section transversale ogivale dont le plus grand diamètre est essentiellement perpendiculaire à la longueur de la mortaise (21A).

5.- Système de suspension selon la revendication 4, caractérisé en ce que le dispositif de masse d'amortissement (21) est prévu avec une ouverture verticale de chaque côté de la mortaise (21A), et comprend, en outre :
- des moyens de support de la masse d'amortissement pour supporter le dispositif de masse d'amortissement, ces moyens de support de la masse d'amortissement comportant un assemblage de support (42 - 46) dans chacune des ouvertures (47), chacun de ces assemblages de support incluant :
  - une tige verticale (45)
  - une retenue de tige (44) placée entre les extrémités de la tige et supportant cette tige,
  - des portées supérieures et inférieures (43),
  - et des ressorts de centrage (42) entre la retenue de tige et chacune des portées.

6.- Système de suspension selon la revendication 5, caractérisé en ce que les ressorts de centrage (42) sont pré-comprimés.

7.- Système de suspension selon l'une quelconque des revendications 1 à 6, caractérisé en ce qu'il comporte :
- un axe (32) relié à l'axe (27) de la roue,
- un bras de contrôle (14) articulé entre les moyens de support de la masse d'amortissement et le corps (37) du véhicule,
- et des moyens d'actionnement (41) pour résister au déplacement vertical de la roue et qui sont articulés entre le corps du véhicule et les moyens de support de la masse d'amortissement.

8.- Système de suspension selon la revendication 1, caractérisé en ce qu'il comporte des moyens de stockage de l'énergie (57) reliés au dispositif de masse d'amortissement (60) pour échanger de l'énergie avec lui, et des moyens (54) de dissipation de l'énergie reliés au dispositif de masse d'amortissement (60) pour dissiper l'énergie vibrationnelle.

9.- Système de suspension selon la revendication 8, caractérisé en ce que les moyens de stockage de l'énergie comportent un ressort (57) tandis que les moyens de dissipation de l'énergie comportent un amortisseur (54).

10.- système de suspension selon la revendication 8 ou la revendication 9, caractérisé en ce que les moyens de dissipation de l'énergie comprennent le fluide d'amortissement (60), lequel constitue également une majeure partie du dispositif de la masse d'amortissement.

11.- Système de suspension selon la revendication 8, caractérisé en ce qu'il comporte un assemblage de support sur chaque côté de l'axe de la roue, chacun de ces assemblages de support comprenant :
- une tige verticale (51),
- une retenue de tige (56) placée entre les extrémités de la tige et supportant cette tige,
- des portées supérieures et inférieures (55),
- et des ressorts de centrage (57) entre la retenue des tiges et chacune des portées,
chaque assemblage de support comportant, en outre, des chambres terminales (62) contenant le fluide d'amortissement (60), la tige verticale respective (51) étant située dans les chambres terminales et déplaçant le fluide d'amortissement lorsque le dispositif de masse d'amortissement est en mouvement.

12.- Système de suspension selon la revendication 11, caractérisé en ce que la tige verticale est creuse et comprend le moyen de support de la masse d'amortissement, et en ce que l'assemblage de support comporte en outre, des moyens (62A) pour permettre le passage du fluide d'amortissement d'une première des chambres à une seconde.

13.- Système de suspension selon la revendication 121, caractérisé en ce que les moyens pour permettre le passage du fluide d'amortissement comportent un orifice limitatif (62A) pour établir un facteur d'amortissement prédéterminé.

14.- Véhicule caractérisé en ce qu'il a un système de suspension correspondant à l'une des revendications 1 à 13.

15.- Véhicule selon la revendication 14, caractérisé en ce qu'il comporte en outre, une roue (11), cette roue ayant une région annulaire autour de l'axe (13) de la roue, le dispositif de masse d'amortissement (21, 60) étant logé dans cette région annulaire.

16.- Véhicule selon la revendication 15, prise en combinaison avec la revendication 8, caractérisé en ce que les moyens de stockage de l'énergie et les moyens de dissipation de l'énergie, sont logés dans la région annulaire.

TIRE
12
17 (BODY)
M
ACTUATOR
R₁
15
15B
11
13
MD
15A
21
14A
14C
14B
x
F
x₁
R₂

$$R_2 = \frac{R_1 x}{x_1}$$

*Fig. 1A*

M
R₁
x
21
MD
x₁
F
R₂

$$-R_2 = \frac{R_1 x}{x_1}$$

*Fig. 1B*

M
R₁
21
MD
F
R₂
R₁ = F

*Fig. 1C*

53
59
58
63
62
55
62A
57
56
64
54
60
58
52
51

UP
WHEEL MOTION
DOWN

61

*Fig. 5*

EP 0 344 923 B1

Fig. 2

*Fig. 3*

*Fig. 4*